(19)

Europäisches Patentamt

European Patent Office

Office européen des brevets

(11) **EP 2 423 830 A1**

(12) **EUROPÄISCHE PATENTANMELDUNG**

(43) Veröffentlichungstag:
**29.02.2012 Patentblatt 2012/09**

(51) Int Cl.:
***G06F 17/30*** *(2006.01)*

(21) Anmeldenummer: **10174043.9**

(22) Anmeldetag: **25.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Omikron Data Quality GmbH**
**75177 Pforzheim (DE)**

(72) Erfinder:
• **Karayel Emin**
**775173 Pforzheim (DE)**

• **Heinz Carsten**
**75175 Pforzheim (DE)**
• **Krings Matthias**
**76137 Karlsruhe (DE)**

(74) Vertreter: **Reitstötter - Kinzebach**
**Patentanwälte**
**Sternwartstrasse 4**
**81679 München (DE)**

(54) **Verfahren zum Suchen in einer Vielzahl von Datensätzen und Suchmaschine**

(57) Die vorliegende Erfindung betrifft ein computerimplementiertes Verfahren zum Suchen in einer Vielzahl (D) von Datensätzen ($d_l$), bei dem eine Suchanfrage (Q) mit mindestens einem Suchterm ($q_i$) empfangen wird, aus einer Referenzmenge (T) eine Teilmenge (V) mit Termen ($t_j$) ermittelt wird, die ähnlich oder identisch mit dem Suchterm ($q_i$) sind, für jeden Term ($t_j$) der Teilmenge (V) ein Ähnlichkeitsmaß ($A_j$) zu dem Suchterm ($q_i$) bestimmt wird, die Wahrscheinlichkeit ($p_j$) für das Auftreten des Terms ($t_j$) bestimmt wird, eine von dem Term ($t_i$) abhängige Gewichtungsverteilung ($X_j$) auf die Terme ($t_k$) der Teilmenge (V) angewandt wird, wobei die Terme ($t_k$), die ein höheres Ähnlichkeitsmaß besitzen, stärker gewichtet werden als Terme ($t_k$) mit einem niedrigeren Ähnlichkeitsmaß, und eine modifizierte Wahrscheinlichkeit ($p'_j$, $p''_j$) für den Term ($t_j$) aus den gewichteten Wahrscheinlichkeiten der Terme ($t_k$) der Teilmenge (V) bestimmt wird. Ferner werden die Datensätze ($d_i$) im Hinblick auf ihre Relevanz (R) für die Suchanfrage (Q) bewertet, wobei geprüft wird, ob die Terme ($t_j$) der Teilmenge (V) in dem Datensatz ($d_l$) vorkommen, und, wenn ein Term ($t_j$) der Teilmenge (V) in dem Datensatz ($d_l$) vorkommt, eine niedrigere modifizierte Wahrscheinlichkeit ($p'_j$, $p''_j$) des Terms ($t_j$) zu einer höheren Relevanzbewertung des Datensatzes ($d_l$) führt, und es wird zumindest eine Datensatzteilmenge in Abhängigkeit von ihrer Relevanzbewertung (R) ausgegeben. Außerdem betrifft die Erfindung eine Suchmaschine zum Ausführen dieses Verfahrens.

$$T = \{t_1, t_2, ...\}$$
$$P = \{p_1, p_2, ...\}$$

$$D = \{d_1, d_2, ...\}$$

Fig. 1

**EP 2 423 830 A1**

Printed by Jouve, 75001 PARIS (FR)

**Beschreibung**

Die vorliegende Erfindung betrifft ein computerimplementiertes Verfahren zum Suchen in einer Vielzahl von Datensätzen. Ferner betrifft die Erfindung eine entsprechende, von einem Computer ausführbare Suchmaschine.

Die Suche in einer Vielzahl von Datensätzen ist beispielsweise in sogenannten Online-Shops von großer Bedeutung. Ein Anbieter von einer Vielzahl von Produkten erfasst die angebotenen Produkte anhand von Datensätzen in einer Datenbank. Ein Nutzer kann nun mittels seines Computers über ein Netzwerk, wie beispielsweise dem Internet, eine Verbindung zu dem Online-Shop herstellen und die Datensätze der Datenbank aufrufen. Umfasst die Datenbank einen sehr großen Datenbestand, und sind die einzelnen Datensätze relativ komplex strukturiert, ist es erforderlich, dass der Nutzer in den Datensätzen mittels einer Suchmaschine suchen kann. Dabei übermittelt der Nutzer eine Suchanfrage an den Online-Shop. Der Online-Shop oder ein damit verbundenes System verarbeitet die Suchanfrage und gibt als Suchtreffer in bestimmter Weise geordnete Datensätze an den Nutzer zurück. Dabei ergibt sich das Problem, die Datensätze zu bestimmen, die für die Suchanfrage des Nutzers besonders relevant sind.

Des Weiteren ist es bekannt, nicht nur in der Datenbank eines Online-Shops zu suchen, sondern auch nach Daten, die über das Internet empfangbar sind. Derartige Suchmaschinen werden als Internet-Suchmaschinen bezeichnet.

Bei allen Suchmaschinen ergibt sich das Problem, dass die Suchanfrage häufig vage und mit einer Unsicherheit behaftet ist. Die Suchterme der Suchanfrage entsprechen häufig nicht exakt den Begriffen, die in den zu durchsuchenden Datensätzen vorkommen. Außerdem kann es vorkommen, dass die Suchterme Tippfehler enthalten oder sich auch auf grammatikalisch andere Formen des Suchterms beziehen sollen. Bei der Verarbeitung der Suchanfrage ist man daher stets bestrebt, die Vagheit und Unsicherheit der Suchanfrage mit zu berücksichtigen.

Aus der EP 1 095 326 B1 ist ein Suchsystem für die Wiedergewinnung von Informationen beschrieben, die in Form von Text gespeichert ist. Bei dem Suchsystem wird für die Informationswiedergewinnung als Datenstruktur für den Text eine Baumstruktur verwendet. Ferner wird anhand eines Maßes der Grad der Übereinstimmung zwischen einer Anfrage und der wiedergewonnenen Information bestimmt, wobei das Maß eine Kombination aus einem Abstandsmaß für einen ungefähren Grad an Übereinstimmung zwischen Wörtern bzw. Symbolen in dem Text und der Anfrage bestimmt, und einem anderen Abstandsmaß für einen ungefähren Grad an Übereinstimmung zwischen Sequenzen von Wörtern bzw. Symbolen in dem Text und einer Anfragesequenz bestimmt.

In der EP 1 208 465 B1 ist eine Suchmaschine zum Durchsuchen einer Dokumentensammlung beschrieben. Bei dieser Suchmaschine bilden Datenverarbeitungseinheiten Gruppen von Knoten, die in einem Netzwerk verbunden sind. Die Suchmaschine ist so angepasst, dass sie im Hinblick auf das Datenvolumen und die Anfragerate für Suchanfragen skaliert werden kann.

In der EP 1 341 009 B1 ist ein Verfahren zum Betreiben einer Internet-Suchmaschine beschrieben. Bei dem Verfahren werden Links zwischen Websites im Internet mittels eines intelligenten Agenten durchlaufen. Die Inhalte der besuchten Websites werden gefiltert, um die Relevanz des Inhalts zu bestimmen. Die dabei ermittelten relevanten Websites werden indexiert und die indexierte, gegenstandsspezifische Information wird in einer Datenbank gespeichert. Bei den Filtern werden die Inhalte einer Website durch ein gegenstandsspezifisches Filter auf Lexikonbasis durchgelassen, wobei das Filter Inhalte der Website mit im Lexikon gefundener Terminologie vergleicht.

In der EP 1 459 206 B1 ist ein computerimplementiertes Verfahren zum Suchen einer Sammlung von Posten beschrieben, wobei jeder Posten in der Sammlung einen Satz von Eigenschaften aufweist. Bei dem Verfahren wird eine Abfrage empfangen, welche aus einem ersten Satz von zwei oder mehr Eigenschaften gebildet ist. Es wird daraufhin eine Distanzfunktion auf ein oder mehrere der Posten in der Sammlung angewandt und ein Ergebnisposten oder mehrere Ergebnisposten werden auf Grundlage der Distanzfunktion identifiziert. Dabei bestimmt die Distanzfunktion eine Distanz zwischen der Abfrage und einen Posten in der Sammlung, und zwar auf Grundlage der Anzahl von Posten in der Sammlung, welche alle Eigenschaften in der Schnittmenge des ersten Satzes von Eigenschaften und des Satzes von Eigenschaften für den Posten aufweisen.

Schließlich sind in der EP 1 622 054 A1, der WO 2008/085637 A2 und der WO 2008/137395 A1 weitere Suchverfahren und Suchmaschinen für eine Suche in Datensätzen beschrieben.

Der vorliegenden Erfindung liegt das technische Problem zugrunde, ein computerimplementiertes Verfahren zum Suchen in einer Vielzahl von Datensätzen und eine entsprechende von einem Computer ausführbare Suchmaschine bereitzustellen, die aus der Vielzahl von Datensätzen bestimmte Datensätze ausgibt, die für eine empfangene Suchanfrage so relevant wie möglich sind.

Erfindungsgemäß wird dieses technische Problem durch ein Verfahren mit den Merkmalen des Anspruchs 1 und eine Suchmaschine mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird eine Suchanfrage mit mindestens einem Suchterm empfangen. Anschließend wird aus einer Referenzmenge eine Teilmenge mit Termen ermittelt, die ähnlich oder identisch mit dem Suchterm sind. Enthält die Suchanfrage mehrere Suchterme, wird für jeden Suchterm gesondert eine Referenzmenge ermittelt. Für jeden Term der Teilmenge wird dann ein Ähnlichkeitsmaß zu dem Suchterm bestimmt und die Wahrscheinlichkeit für das Auftreten des Terms bestimmt. Nun wird eine von dem Term abhängige Gewichtungsverteilung auf die Terme der Teilmenge angewandt, wobei die Terme, die ein höheres Ähnlichkeitsmaß besitzen, stärker gewichtet werden als Terme mit einem niedrigeren Ähnlichkeitsmaß. Danach wird eine modifizierte Wahrscheinlichkeit für den Term aus den gewichteten Wahrscheinlichkeiten der Terme der Teilmenge bestimmt.

Anschließend werden bei dem erfindungsgemäßen Verfahren die Datensätze im Hinblick auf ihre Relevanz für die Suchanfrage bewertet. Bei dieser Bewertung wird geprüft, ob die Terme der Teilmenge in dem Datensatz vorkommen, und, wenn ein Term der Teilmenge in dem Datensatz vorkommt, führt eine niedrigere modifizierte Wahrscheinlichkeit des Terms zu einer höheren Relevanzbewertung des Datensatzes. Schließlich wird zumindest eine Datensatzteilmenge in Abhängigkeit von ihrer Relevanzbewertung ausgegeben.

Für die Relevanz eines Suchterms einer Suchanfrage ist es von Bedeutung, wie häufig dieser Suchterm in Mengen mit derartigen Termen vorkommt. Wenn ein Term üblicherweise sehr häufig vorkommt, ist er bei der Verarbeitung der Suchanfrage weniger relevant als ein Suchterm der Suchanfrage, der üblicherweise in Termmengen sehr selten vorkommt. Bei dem erfindungsgemäßen Verfahren werden die unterschiedlichen Häufigkeiten, mit denen Suchterme vorkommen, dadurch berücksichtigt, dass eine Auftretenswahrscheinlichkeit jedes Terms der Teilmenge bestimmt wird. Diese Termwahrscheinlichkeiten können beispielsweise vorab anhand von bestimmten Mengen mit Termen bestimmt werden, zum Beispiel anhand von vorab ausgewählten Texten, bei denen die Worthäufigkeiten bestimmt worden sind. Die Menge, auf welche sich die Auftretenswahrscheinlichkeit der Terme bezieht, kann außerdem von der Gesamtheit der Terme gebildet sein, die in den zu durchsuchenden Datensätzen vorkommen. Diese Datensätze können vorab durchsucht und indiziert werden. Dabei kann für jeden Term in einem Datensatz außerdem die Häufigkeit bestimmt werden, mit welcher dieser Term in den Datensätzen aufgetreten ist.

Dabei kann sich jedoch das Problem ergeben, dass zum einen die zu durchsuchenden Datensätze Fehler enthalten können und zum anderen auch die Suchterme der Suchanfrage Fehler enthalten können. Bei den Fehlern kann es sich beispielsweise um Schreib- oder Tippfehler handeln. Ein Wort kann beispielsweise in einer nicht korrekten Schreibweise in einem Datensatz enthalten sein. Wird nun die Auftretenshäufigkeit der Terme bestimmt, würde sich bei einem nicht korrekt geschriebenen Wort eines Suchterms ergeben, dass dieses Wort für die Suchanfrage eine besonders hohe Relevanz hat, da es sehr selten vorkommt. Die gleiche Situation ergibt sich, wenn die Wahrscheinlichkeit des Auftretens eines Terms anhand der Gesamtheit der Terme bestimmt wird, die in den Datensätzen vorkommen. Enthalten die Datensätze ein nicht korrekt geschriebenes Wort, tritt dieses Wort sehr selten auf, so dass die Auftretenswahrscheinlichkeit dieses Wortes sehr gering ist und damit die Relevanz des Wortes für eine Suchanfrage sehr hoch ist.

Bei dem erfindungsgemäßen Verfahren wird dieses Problem dadurch gelöst, dass nicht nur die Auftretenswahrscheinlichkeit bzw. die Häufigkeit eines Terms einer Suchanfrage berücksichtigt wird, sondern für jeden Suchterm in der Suchanfrage eine Teilmenge mit Termen aus einer Referenzmenge ermittelt wird, die bei der anschließenden Relevanzbewertung der Datensätze im Hinblick auf diesen Suchterm berücksichtigt wird. Die Teilmenge kann beispielsweise anhand eines Lexikons bestimmt werden. In diesem Fall ergibt sich, dass ein Suchterm mit einem nicht korrekt geschriebenen Wort nicht in der Teilmenge enthalten wäre, sondern nur ähnliche Wörter, die korrekt geschrieben sind.

Um auch andere grammatikalische Formen eines Wortes eines Suchterms zu berücksichtigen, enthält die Referenzmenge insbesondere alle grammatikalischen Formen von Wörtern. Die Teilmenge wird daher nicht nur ein Wort eines Suchterms enthalten, sondern auch andere grammatikalische Formen dieses Wortes, da diese Formen ähnlich mit dem Suchterm sind.

Bei dem erfindungsgemäßen Verfahren wird nun nicht nur jeder Term dieser auf diese Weise bestimmten Teilmenge bei der Relevanzbewertung der Datensätze im Hinblick auf den Suchterm berücksichtigt, sondern die Terme dieser Teilmenge werden erfindungsgemäß in besonderer Weise berücksichtigt:

Da für jeden Term der Teilmenge ein Ähnlichkeitsmaß zu dem zugehörigen Suchterm bestimmt wird, können die Terme der Teilmenge nach ihrem Ähnlichkeitsmaß geordnet werden. Mittels einer Gewichtungsverteilung wird nun in Abhängigkeit von dem Term bestimmt, wie die anderen Terme der Teilmenge bei der Bestimmung der modifizierten Wahrscheinlichkeit berücksichtigt werden. Dabei werden Terme, die ein höheres Ähnlichkeitsmaß besitzen, stärker gewichtet als Terme mit einem niedrigeren Ähnlichkeitsmaß. Auf diese Weise ist es möglich, auch bei einem Suchterm, der beispielsweise einen Tippfehler enthält, zu einer angemessenen modifizierten Wahrscheinlichkeit für diesen Term zu gelangen, auf deren Basis schließlich die Relevanz der Datensätze bestimmt wird. In der zu einem Suchterm mit einem Tippfehler gehörigen Teilmenge ist nämlich mit hoher Wahrscheinlichkeit auch der korrekt geschriebene Term sowie Abwandlungen davon enthalten. Diese Terme, die in der Teilmenge enthalten sind, werden dann bei der Bestimmung der modifizierten Wahrscheinlichkeit mit berücksichtigt, so dass das seltene Auftreten des Suchterms mit dem Tippfehler nicht zu einer sehr hohen Relevanz dieses Terms für die Bewertung der Datensätze führt. Auf die gleiche Weise kann auch verhindert werden, dass Tippfehler, die in den zu durchsuchenden Datensätzen vorkommen, zu nicht geeigneten Ergebnissen bei der Bewertung eines solchen Datensatzes führen.

Gemäß einer Ausgestaltung des erfindungsgemäßen Verfahrens ist die Gewichtungsverteilung so ausgebildet, dass bei der Bestimmung der modifizierten Wahrscheinlichkeit eines Terms nur die Wahrscheinlichkeit des Terms selbst sowie die Wahrscheinlichkeiten anderer Terme berücksichtigt werden, die ein höheres Ähnlichkeitsmaß als der eine Term besitzen. Die Gewichtungsverteilung kann in diesem Fall somit beispielsweise eine Stufenfunktion sein, welche für den Term der Teilmenge selbst sowie für andere Terme, die ein höheres Ähnlichkeitsmaß haben als dieser Term, die Gewichtung 1 ausgibt und für Terme der Teilmenge mit einem geringeren Ähnlichkeitsmaß die Gewichtung 0 ausgibt, so dass diese Terme mit geringerem Ähnlichkeitsmaß bei der Bestimmung der modifizierten Wahrscheinlichkeit unberücksichtigt bleiben. Bei der Bestimmung der modifizierten Wahrscheinlichkeit für einen Term wird somit zum einen die Wahrscheinlichkeit des Terms selbst berücksichtigt, sowie die Wahrscheinlichkeit jedes anderen Terms der Teilmenge, der ein höheres Ähnlichkeitsmaß als dieser Term hat.

Gemäß einer bevorzugten Ausgestaltung des erfindungsgemäßen Verfahrens wird die Gewichtung, mit der die Wahrscheinlichkeit eines zweiten Terms $t_k$ in die modifizierte Wahrscheinlichkeit eines ersten Terms $t_j$ eingeht, durch die Auswertung einer Sigmoid-Funktion bestimmt, wobei die Auswertungsstelle die Subtraktion des Ähnlichkeitsmaßes des ersten Terms $t_j$ vom Ähnlichkeitsmaß des zweiten Terms $t_k$ ist. Da die Sigmoid-Funktion im Gegensatz zu einer unstetigen Stufenfunktion einen stetigen Übergang vom Wert 0 zum Wert 1 hat, können bei dieser Ausgestaltung des erfindungsgemäßen Verfahrens auch Terme der Teilmenge berücksichtigt werden, die ein geringfügig niedrigeres Ähnlichkeitsmaß haben als der Term, dessen modifizierte Wahrscheinlichkeit bestimmt wird. Auf diese Weise kann die auf Basis der modifizierten Wahrscheinlichkeit bewertete Relevanz der Datensätze weiter verbessert werden.

Gemäß einer weiteren Ausgestaltung des erfindungsgemäßen Verfahrens ist die Gewichtungsverteilung so ausgebildet, dass bei der Bestimmung der modifizierten Wahrscheinlichkeit eines Terms ferner Wahrscheinlichkeiten von anderen Termen mit einer geringeren Gewichtung berücksichtigt werden, die ein niedrigeres Ähnlichkeitsmaß besitzen, wobei die Gewichtung eines anderen Terms mit niedrigerem Ähnlichkeitsmaß von der Differenz des Ähnlichkeitsmaßes des Terms, für den die modifizierte Wahrscheinlichkeit bestimmt wird, und des Ähnlichkeitsmaßes des anderen Terms abhängt. Insbesondere wird die Gewichtung eines anderen Terms mit niedrigerem Ähnlichkeitsmaß umso höher sein, desto geringer der Absolutbetrag der Differenz zu dem Ähnlichkeitsmaß des Terms ist, für den die modifizierte Wahrscheinlichkeit bestimmt wird. Auf diese Weise können durch Anwendung beliebiger anderer Funktionen Terme mit niedrigerem Ähnlichkeitsmaß für die Bestimmung der modifizierten Wahrscheinlichkeit jedes Terms der Teilmenge und damit für die Bewertung der Relevanz der Datensätze berücksichtigt werden.

Die modifizierte Termwahrscheinlichkeit eines gegebenen Terms stellt die Wahrscheinlichkeit der Vereinigung aller Terme dar, deren Ähnlichkeit (in einem verallgemeinerten Sinne) zum Suchterm größer sind, als die Ähnlichkeit des gegebenen Terms. Für die Bewertung eines Datensatzes ist es jedoch sinnvoll die Wahrscheinlichkeit zu ermitteln, dass ein Datensatz einen solchen enthält. Da ein Datensatz viele Terme enthält, ist diese Wahrscheinlichkeit größer. Hierzu wird gemäß einer Weiterbildung des erfindungsgemäßen Verfahrens bei der Berechnung der modifizierten Wahrscheinlichkeit außerdem, ein Zwischenschritt eingeführt, der die Verteilung der Anzahl der Terme je Datensatz der zu durchsuchenden Datensätze berücksichtigt. Dabei wird insbesondere berücksichtigt, dass ein Datensatz mehrere ähnliche Terme gleichzeitig enthalten könnte.

Die Bewertung eines Datensatzes kann sich beispielsweise aus dem Absolutbetrag des Logarithmus der modifizierten Wahrscheinlichkeit des zugehörigen Terms ergeben. Auf diese Weise lassen sich die verschiedenen Wahrscheinlichkeiten der zu berücksichtigenden Terme für die Bestimmung der modifizierten Wahrscheinlichkeit eines Terms leichter zusammenführen.

Die Wahrscheinlichkeit für das Auftreten des Terms der Teilmenge wird insbesondere dadurch bestimmt, dass die dem Term zugeordnete Wahrscheinlichkeit vorab aus der Häufigkeit des Terms in der Referenzmenge oder in den Datensätzen ermittelt und in einem Speicher gespeichert wird, und die gespeicherte Wahrscheinlichkeit für den Term später aus dem Speicher ausgelesen wird. Durch diese vorherige Bestimmung der Wahrscheinlichkeiten kann die Ausführung des Verfahrens beschleunigt und vereinfacht werden. Außerdem kann man durch die Wahl der Referenzmenge auf allgemeine Analysen zur Auftretenshäufigkeit von Termen in Mengen, d.h. zum Beispiel von Wörtern in Texten, zurückgreifen. Schließlich kann man durch die Berücksichtigung der Auftretenshäufigkeit der Terme in den Datensätzen Wahrscheinlichkeiten ermitteln, welche an die speziellen Datensätze angepasst sind. Handelt es sich bei den Datensätzen beispielsweise um eine Produktdatenbank, dann können die Auftretenshäufigkeiten bestimmter Wörter von den Häufigkeiten abweichen, die aus allgemeinen Texten anderer Art bestimmt worden sind.

Gemäß einer Weiterbildung des erfindungsgemäßen Verfahrens enthält die Suchanfrage mehrere Suchterme. In diesem Fall wird für jeden Suchterm gesondert eine Teilbewertung bestimmt. Ferner wird eine weitere Teilbewertung für die aus den Suchtermen zusammengesetzte Suchanfrage bestimmt. Die Bewertung der Suchanfrage wird dann aus den Teilbewertungen bestimmt.

Des Weiteren kann bei dem Verfahren bei der Relevanzbewertung der Datensätze ein Datensatz höher bewertet werden, wenn ein Term der Teilmenge häufiger in diesem Datensatz vorkommt. Beispielsweise kann ein Datensatz umso höher bewertet werden, je häufiger ein Term der Teilmenge in diesem Datensatz vorkommt. Auf diese Weise kann nicht nur die Auftretenswahrscheinlichkeit eines Terms sowie weiterer Terme der Teilmenge in die Relevanzbewertung der Datensätze einfließen, sondern auch die konkrete Auftretenshäufigkeit eines Terms in dem zu bewertenden Datensatz. Auch diese Maßnahme führt zu einer weiteren Verbesserung der Relevanzbewertung der Datensätze.

Ein Datensatz kann beispielsweise jeweils mehrere Felder enthalten. Dies ist beispielsweise insbesondere dann der Fall, wenn die Datensätze eine Produktdatenbank betreffen. In diesem Fall sind bei der Relevanzbewertung der Datensätze bestimmte Felder wichtiger, andere Felder hingegen weniger wichtig. Aus diesem Grund wird in diesem Fall bei dem erfindungsgemäßen Verfahren bevorzugt die Relevanz eines Datensatzes außerdem in Abhängigkeit davon bewertet, in welchem Feld ein Term der Teilmenge in dem Datensatz vorkommt. Kommt ein Term in einem besonders wichtigen Feld vor, führt dies zu einer höheren Bewertung des Datensatzes, als wenn der Term in einem weniger wichtigen Feld vorkommt.

Die Erfindung betrifft außerdem ein Computerprogrammprodukt mit Programmcodes zur Durchführung des vorstehend beschriebenen Verfahrens, wenn der Programmcode von einem Computer ausgeführt wird. Bei dem Computerprogrammprodukt kann es sich insbesondere um ein beliebiges Speichermedium für Computersoftware handeln.

Die erfindungsgemäße, von einem Computer ausführbare Suchmaschine umfasst eine Empfangseinheit zum Empfangen einer Suchanfrage mit mindestens einem Suchterm. Die Suchanfrage kann beispielsweise über ein Netzwerk, wie das Internet, empfangen werden. Des Weiteren umfasst die Suchmaschine Mittel zum Ermitteln einer Teilmenge mit Termen, die ähnlich oder identisch mit dem Suchterm sind. Diese Teilmenge wird insbesondere aus einer Referenzmenge ermittelt.

Des Weiteren umfasst die erfindungsgemäße Suchmaschine Mittel zum Bestimmen einer modifizierten Wahrscheinlichkeit für jeden Term der Teilmenge. Diese Mittel zum Bestimmen der modifizierten Wahrscheinlichkeit sind so ausgebildet, dass ein Ähnlichkeitsmaß des jeweiligen Terms zu dem Suchterm bestimmbar ist, die Wahrscheinlichkeit für das Auftreten des Terms bestimmbar ist, eine von dem Term abhängige Gewichtungsverteilung auf die Terme der Teilmenge anwendbar ist, wobei die Terme, die ein höheres Ähnlichkeitsmaß zum Suchterm besitzen, stärker gewichtet werden als Terme mit einem niedrigeren Ähnlichkeitsmaß, und die modifizierte Wahrscheinlichkeit für den Term aus den gewichteten Wahrscheinlichkeiten der Terme der Teilmenge bestimmbar ist.

Des Weiteren umfasst die erfindungsgemäße Suchmaschine eine Bewertungseinheit zum Bewerten von Datensätzen im Hinblick auf ihre Relevanz für die Suchanfrage. Mittels dieser Bewertungseinheit ist insbesondere prüfbar, ob die Terme der Teilmenge in dem Datensatz vorkommen, und, wenn ein Term der Teilmenge in dem Datensatz vorkommt, eine niedrigere modifizierte Wahrscheinlichkeit des Terms zu einer höheren Bewertung des Datensatzes führt.

Schließlich umfasst die erfindungsgemäße Suchmaschine eine Ausgabeeinheit zum Ausgeben einer Datensatzteilmenge in Abhängigkeit von ihrer Relevanzbewertung.

Die erfindungsgemäße Suchmaschine ist insbesondere so ausgebildet, dass sie das vorstehend beschriebene Verfahren ausführen kann. Sie weist somit auch dieselben Vorteile wie das vorstehend angegebene Verfahren auf.

Gemäß einer Ausgestaltung der erfindungsgemäßen Suchmaschine umfasst diese einen Speicher, in dem die Referenzmenge mit Termen oder eine Menge mit den Termen, die in den Datensätzen vorkommen, sowie die den Termen zugeordneten Wahrscheinlichkeiten gespeichert sind. Die Wahrscheinlichkeiten ergeben sich dabei insbesondere aus der Auftretenshäufigkeit der Terme in der Referenzmenge bzw. in den Datensätzen, die zu durchsuchen sind.

Die Erfindung wird nun anhand der Ausführungsbeispiele mit Bezug zu den Zeichnungen erläutert.

Figur 1    zeigt schematisch den prinzipiellen Aufbau der Suchmaschine gemäß einem Ausführungsbeispiel der Erfindung und

Figur 2    zeigt die Schritte bei der Durchführung eines Ausführungsbeispiels des erfindungsgemäßen Verfahrens.

Das im Folgenden beschriebene Ausführungsbeispiel betrifft die Suche in einer Produktdatenbank D. Für jedes Produkt ist in dieser Produktdatenbank D ein Datensatz $d_l$ gespeichert. Jeder Datensatz $d_l$ kann wiederum in mehrere Felder unterteilt sein, die sich beispielsweise auf den Preis des Produkts, die Farbe des Produkts, das Material des Produkts oder andere relevante Merkmale des Produkts beziehen können.

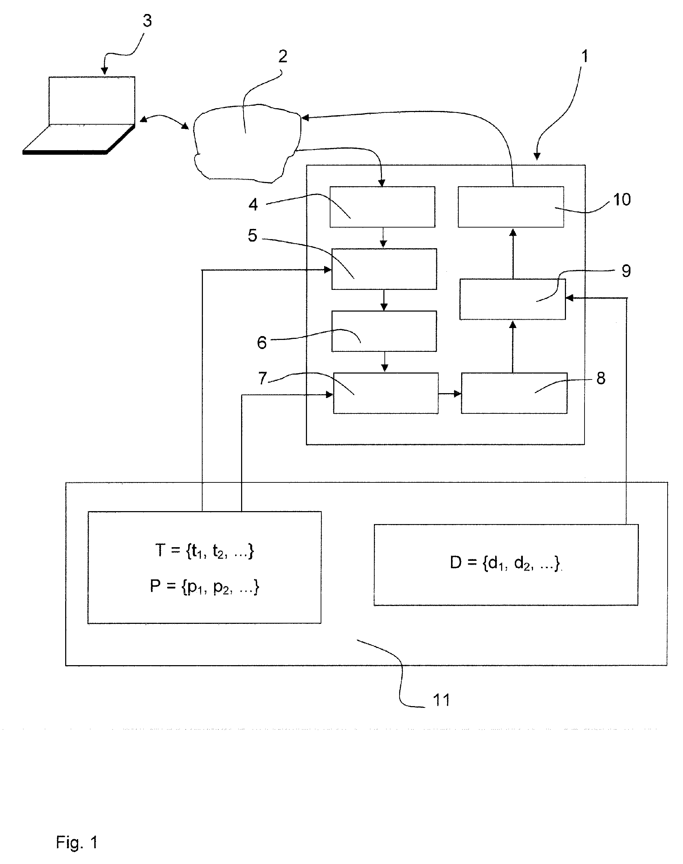

Die Produktdatenbank D wird einem Nutzer in Verbindung mit einem Online-Shop bereitgestellt. Wie schematisch in Figur 1 gezeigt, kann der Nutzer mittels seines Computers 3 über das Internet 2 auf eine Website zugreifen, die von einer Zentraleinheit 1 des Online-Shops bereitgestellt wird. Der Nutzer kann mittels seines Computers 3 über das Internet 2 dem Online-Shop eine Suchanfrage Q übermitteln, welche von einer Empfangseinheit 4 der Zentraleinheit 1 des Online-Shops empfangen wird. Die Empfangseinheit 4 überträgt die Suchanfrage Q an eine Einrichtung 5 zum Ermitteln einer Teilmenge V mit Termen, die ähnlich oder identisch mit einem Suchterm $q_i$ der Suchanfrage Q sind. Hierfür ist die Zentraleinheit 1 mit einem Speicher 11 gekoppelt. Dieser Speicher 11 kann zum einen die Produktdatenbank D enthalten. Zum anderen enthält der Speicher 11 eine Referenzmenge T mit Termen t. Die Referenzmenge T ist beispielsweise eine Wortdatenbank, in der im Wesentlichen alle Worte einer Sprache oder mehrerer Sprachen enthalten sind, oder alle Worte enthalten sind, die in einer Produktdatenbank vorkommen können. Bei den Termen t handelt es sich in diesem Fall somit insbesondere um Wörter.

Außerdem ist in dem Speicher 11 für jeden Term $t_j$ eine Wahrscheinlichkeit $p_j$ gespeichert. Diese Wahrscheinlichkeit $p_j$ eines Terms $t_j$ gibt an, wie die Wahrscheinlichkeit ist, dass dieser Term $t_j$ in einer Menge mit Termen auftritt.

Diese Wahrscheinlichkeiten $p_j$ können insbesondere aus den Häufigkeiten abgeleitet werden, mit denen ein bestimmtes Wort in Texten einer bestimmten Sprache auftritt. Diese Auftretenshäufigkeiten sind an sich bekannt und können vorab in dem Speicher 11 gespeichert werden. Alternativ könnte bestimmt werden, wie häufig ein bestimmter Term $t_j$ in der Datenbank D auftritt. Aus dieser Auftretenshäufigkeit könnte dann die Wahrscheinlichkeit $p_j$ dafür bestimmt werden, dass der Term $t_j$ in der Datenbank D vorkommt.

Nachdem von der Einrichtung 5 eine Teilmenge V mit Termen $t_j$ bestimmt worden ist, wird für jeden Term $t_j$ der Teilmenge V mittels der Einrichtung 6 ein Ähnlichkeitsmaß für den jeweiligen Term $t_j$ bestimmt. Das Ähnlichkeitsmaß gibt an, wie ähnlich der Term $t_j$ zu einem Suchterm $q_i$ der Suchanfrage Q ist.

Die Einrichtung 6 ist mit einer Einrichtung 7 gekoppelt, welche die Wahrscheinlichkeit $p_j$ für das Auftreten des Terms $t_j$ bestimmen kann. Diese Wahrscheinlichkeit $p_j$ kann die Einrichtung 7 beispielsweise einfach aus dem Speicher 11 auslesen, in dem diese vorab ermittelten Wahrscheinlichkeiten, wie vorstehend erläutert, gespeichert sind.

Die Einrichtung 7 ist mit einer Einrichtung 8 gekoppelt, in welcher eine von einem Term $t_j$ der Teilmenge V abhängige Gewichtungsverteilung $X_j$ auf alle Terme $t_k$ der Teilmenge V anwendbar ist. Durch Anwendung der Gewichtungsverteilung $X_j$ ergeben sich gewichtete Wahrscheinlichkeiten für die Terme $t_k$ der Teilmenge V. Aus diesen gewichteten Wahrscheinlichkeiten kann die Einrichtung 8 modifizierte Termwahrscheinlichkeiten $p'_j$ bestimmen. Des Weiteren kann die Einrichtung die Anzahl der Terme je Datensatz berücksichtigen (zum Beispiel durch Zugriff auf den Speicher 11). Daraus ergibt sich die modifizierte Wahrscheinlichkeit $p'_j$ dafür, dass ein Term $t_j$ oder ein noch ähnlicherer in einem Datensatz auftritt.

Die modifizierten Wahrscheinlichkeiten $p'_j$ werden von der Einrichtung 8 an eine Bewertungseinheit 9 übertragen. Die Bewertungseinheit 9 bewertet die Datensätze $d_l$ im Hinblick auf ihre Relevanz für die Suchanfrage Q. Hierfür greift die Bewertungseinheit 9 auf den Speicher 11 zu und prüft für jeden Datensatz $d_l$ der Produktdatenbank D, ob die Terme $t_j$ der Teilmenge V in dem Datensatz $d_l$ vorkommen. Wenn ein Term $t_j$ der Teilmenge V in dem Datensatz $d_l$ vorkommt, führt die Bewertungseinheit 9 eine Bewertung des Datensatzes $d_l$ unter Berücksichtigung der modifizierten Wahrscheinlichkeiten $p'_j$ der vorkommenden Terme $t_j$ durch.

Die Relevanzbewertung überträgt die Bewertungseinheit 9 an eine Ausgabeeinheit 10. Die Ausgabeeinheit 10 bestimmt eine Datensatzteilmenge in Abhängigkeit von ihrer Relevanzbewertung. Beispielsweise kann die Ausgabeeinheit eine bestimmte Anzahl an Datensätzen $d_l$, welche die höchsten Relevanzbewertungen erhalten haben, in der Reihenfolge ihrer Relevanzbewertung ausgeben. Diese Ausgabe kann über das Internet 2 dem Computer 3 des Nutzers zur Verfügung gestellt werden, zum Beispiel durch eine Anzeige auf einer Website, die auf dem Computer 3 des Nutzers angezeigt wird.

Details zu den vorstehend beschriebenen Einrichtungen der Zentraleinheit 1 werden im Folgenden in Verbindung mit der Erläuterung eines Ausführungsbeispiels des erfindungsgemäßen Verfahrens beschrieben:

Es wird im Folgenden davon ausgegangen, dass die Produktdatenbank D Datensätze $d_l$ zu Kleidungsstücken enthält. Die Produktdatenbank D kann beispielsweise 300 Datensätze enthalten. Die Produktdatenbank D umfasst somit die Datensätze $d_1$, $d_2$, ..., $d_{300}$.

Des Weiteren wird im Folgenden davon ausgegangen, dass 15 Datensätze der Produktdatenbank D das Wort "Shirt" enthalten und 60 Datensätze der Produktdatenbank das Wort "blaues" enthalten. Es enthalten somit 5% der Datensätze das Wort "Shirt" und 20% der Datensätze das Wort "blaues". Außerdem wird zur Vereinfachung zunächst davon ausgegangen, dass diese Wörter in jedem Datensatz $d_l$ höchstens einmal vorkommen.

Es ist in solch einem Fall bei Suchmaschinen bekannt, die inverse Dokumenthäufigkeit (inverse document frequency) zu betrachten. Dabei werden Datensätze $d_l$, die ein selteneres Wort enthalten, mit einer höheren Relevanz belegt, als die Datensätze $d_l$, die ein häufiger vorkommendes Wort enthalten. In dem vorherigen Beispiel werden somit die Datensätze, die das Wort "Shirt" enthalten, mit einer höheren Relevanz belegt, als die Datensätze $d_l$, die das Wort "blaues" enthalten. Außerdem wird ermittelt, welche Datensätze $d_l$ die beiden Wörter "blaues" und "Shirt" enthalten. Unter der Voraussetzung, dass diese beiden Wörter nicht korrelieren, ist zu erwarten, dass es genau drei Datensätze sind. Dies errechnet sich aus dem Produkt der beiden Wahrscheinlichkeiten dafür, dass die Wörter in den Datensätzen $d_l$ vorkommen, d.h. die Wahrscheinlichkeit $p_{Shirt} = 0,05$, multipliziert mit der Wahrscheinlichkeit $p_{blaues} = 0,2$. Die Wahrscheinlichkeit, dass diese beiden Wörter in einem Datensatz $d_l$ enthalten sind, ist somit 0,01 (1%).

Die Relevanz eines Datensatzes $d_l$ für eine Suchanfrage Q ist gerade dann hoch, wenn das Produkt der Wahrscheinlichkeiten der Wörter, die in diesem Datensatz $d_l$ vorkommen und für welche die Suchanfrage relevant sind, klein ist. Je spezifischer ein Datensatz d ist, desto höher ist seine Relevanz. Um die einzelnen Wahrscheinlichkeiten einfacher verknüpfen zu können, wird daher bevorzugt der Absolutbetrag des Logarithmus der Wahrscheinlichkeit gebildet. Dieser Absolutbetrag steigt mit der Relevanz und verhält sich additiv gegenüber den Einzelwahrscheinlichkeiten. Bei dem vorherigen Beispiel ist die logarithmische Wahrscheinlichkeit dafür, dass ein Datensatz $d_l$ das Wort "blaues" enthält, 0,7, dass ein Datensatz $d_l$ das Wort "Shirt" enthält, 1,3 und die logarithmische Wahrscheinlichkeit dafür, dass ein Datensatz $d_l$ beide Wörter enthält, 2.

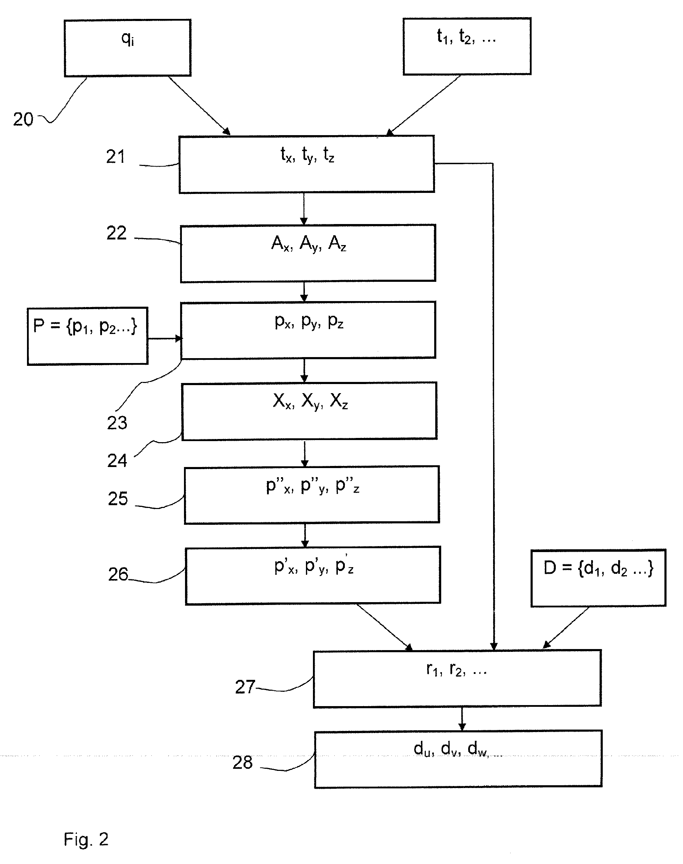

Im Folgenden wird nun mit Bezug zu Figur 2 das erfindungsgemäße Verfahren im Detail erläutert, welches eine Modifikation eines bekannten Verfahrens darstellt, welches die inverse Auftretenshäufigkeit von Termen betrachtet:

Ein Nutzer generiert im Schritt 20 eine Suchanfrage Q, welche die Suchterme $q_i$ enthält, wobei i eine natürliche Zahl ist. Wie in dem vorstehend beschriebenen Beispiel kann der Suchterm $q_1$ "Shirt" sein und der Suchterm $q_2$ "blaues" sein.

Es wird nun im Schritt 21 aus der Referenzmenge T eine Teilmenge V mit Termen $t_j$ ermittelt, die ähnlich oder identisch mit dem ersten Suchterm $q_1$ sind. Die Referenzmenge T kann wie vorstehend erläutert, eine Wortdatenbank sein, die alle Wörter einer Sprache enthält. Verfahren zum automatischen Bewerten der Ähnlichkeit von zwei Zeichenketten sind an sich bekannt. In diesem Fall wird für die Ermittlung der Teilmenge V die Ähnlichkeit eines Suchterms $q_i$ mit allen Termen $t_j$ der Referenzmenge T ermittelt. Die Terme $t_j$, die in einem bestimmten Ähnlichkeitsbereich liegen, werden in die Teilmenge V aufgenommen. Ein Verfahren zur automatischen Bewertung der Ähnlichkeit ist beispielsweise in der WO 2007/144199 A1 beschrieben, deren Offenbarungsgehalt hiermit durch Bezugnahme aufgenommen wird.

Die Teilmenge V kann somit beispielsweise drei Terme $t_x$, $t_y$ und $t_z$ enthalten. Bei dem vorstehend beschriebenen Beispiel kann zu dem Suchterm "Shirt" die folgende Teilmenge V ermittelt werden: {Shirt, Shirts, T-Shirt}. Zu dem zweiten Suchterm "blaues" kann folgende Teilmenge V ermittelt werden: {blaues, blau, blaue}.

Es wird darauf hingewiesen, dass die Teilmenge V nur Elemente der Referenzmenge T enthalten kann. Enthält die Suchanfrage Q somit ein falsch geschriebenes Wort, so wird dieses Wort nicht in die Telmenge V aufgenommen, da es nicht in der Referenzmenge T enthalten ist. Auf diese Weise können falsch geschriebene Wörter einer Suchanfrage Q so aussortiert werden, dass sie nicht mit einer sehr hohen Relevanz belegt werden, da sie sehr selten vorkommen. Trotzdem werden auch falsch geschriebene Wörter bei der Relevanzbewertung der Produktdatenbank D berücksichtigt, da statt des falsch geschriebenen Wortes eine Teilmenge V berücksichtigt wird, die Terme enthält, die ähnlich zu dem falsch geschriebenen Wort sind. Insofern ist das erfindungsgemäße Verfahren fehlertolerant.

Die Terme $t_x$, $t_y$ und $t_z$ der Teilmenge V werden bei dem Verfahren für die Relevanzbewertung der Datensätze $d_l$ der Produktdatenbank D berücksichtigt, jedoch wird die Relevanz jedes Terms $t_j$ der Teilmenge V für diese Bewertung gesondert bestimmt, so dass nicht jeder Term $t_j$ der Teilmenge V die gleiche Relevanz für die Bewertung der Produktdatenbank D haben muss. Hierfür wird im Schritt 22 für jeden Term $t_j$ der Teilmenge V ein Ähnlichkeitsmaß $A_{ij}$ bestimmt, das dieser Term $t_j$ zu dem zugrundeliegenden Suchterm $q_i$ hat. Auch dieses Ähnlichkeitsmaß $A_{ij}$ kann beispielsweise anhand eines Verfahrens bestimmt werden, wie es in der WO 2007/144199 A1 beschrieben ist. Die Teilmenge V kann somit in Abhängigkeit von dem Ähnlichkeitsmaß $A_{ij}$ der enthaltenen Terme $t_j$ bzgl. eines Suchterms $q_i$ sortiert werden. Ist der Suchterm $q_i$ selbst in der Teilmenge V enthalten, wird dieser Term $t_j$ der Teilmenge V das höchste Ähnlichkeitsmaß $A_{ij}$ haben, da er identisch mit dem Suchterm $q_i$ ist. Es folgen mit absteigendem Ähnlichkeitsmaß $A_{ij}$ die weiteren Terme $t_j$ der Teilmenge V.

Für den Suchterm "blaues" kann sich somit beispielsweise die folgende sortierte Teilmenge V ergeben: 1. blaues, 2. blaue, 3. blau.

Es werden nun im Schritt 23 die Wahrscheinlichkeiten $p_j$ der Terme $t_j$ der Teilmenge V bestimmt. Diese stellt die Wahrscheinlichkeit $p_j$ dar, dass der Term $t_j$ aus der Datenbank D gezogen wird, falls einer zufällig ausgewählt wird. Im Gegensatz dazu wurde bei dem oben beschriebenen Relevanzmaß (inverse Dokumenthäufigkeit) die Häufigkeit der Dokumente, d.h. Datensätze, betrachtet. Wie vorstehend erläutert, wird hierfür aus dem Speicher 11 die vorab gespeicherte Wahrscheinlichkeit $p_j$ dafür ausgelesen, dass der Term $t_j$ der Teilmenge T auftritt, d.h. z.B. in bestimmten Texten oder in den Datensätzen $d_l$. Bei dem hier konkret beschriebenen Beispiel kann sich beispielsweise ergeben, dass das Wort "blaues" mit einer Wahrscheinlichkeit von 0,02 auftritt, das Wort "blaue" mit einer Wahrscheinlichkeit von 0,01 auftritt und das Wort "blau" ebenfalls mit einer Wahrscheinlichkeit von 0,01 auftritt. Des Weiteren ist es möglich, zusätzlich die Wahrscheinlichkeit dafür zu bestimmen, dass eines der Wörter "blaues", "blaue", "blau" auftritt. Diese Wahrscheinlichkeit ist 0,04.

Im Schritt 24 wird für jeden Term $t_j$ der Teilmenge V nun eine Gewichtungsverteilung $X_j$ angewandt. Die Art der Gewichtungsverteilung $X_j$ ist dabei von dem Term $t_j$ der Teilmenge V, den man betrachtet, abhängig. Im einfachsten Fall ist die Gewichtungsverteilung $X_j$ eine Stufenfunktion, welche die Gewichtung 1 ausgibt für den Term $t_j$, den man betrachtet, so wie für solche anderen Terme $t_k$ der Teilmenge V, die ein höheres Ähnlichkeitsmaß $A_{ik}$ besitzen als der Term $t_j$, den man aktuell betrachtet. Die Gewichtungsverteilung $X_j$ wirkt in diesem Fall somit als Filter, der alle Terme $t_k$ der Teilmenge V herausfiltert, die ein geringeres Ähnlichkeitsmaß A als der betrachtete Term $t_j$ haben.

Aus den gewichteten Wahrscheinlichkeiten wird dann im Schritt 25 eine modifizierte Termwahrscheinlichkeit $p''_j$ bestimmt, d.h. für den Term $t_j$ wird die modifizierte Wahrscheinlichkeit $p'_j$ bestimmt.

Betrachtet man in dem konkreten Beispiel das Wort "blaues", ergibt sich, dass dieses Wort das höchste Ähnlichkeitsmaß A besitzt, da es identisch mit dem Suchterm "blaues" ist. Die modifizierte Termwahrscheinlichkeit $p''_x$ des Wortes "blaues" entspricht somit der Wahrscheinlichkeit $p_x$ des Wortes "blaues".

Betrachtet man andererseits das Wort "blaue", ergibt sich, dass das Wort "blaues" ein höheres Ähnlichkeitsmaß A hat, das Wort "blau" hingegen ein niedrigeres Ähnlichkeitsmaß A. Bei der Bestimmung der modifizierten Termwahrscheinlichkeit $p''_y$ für das Wort "blaue" wird somit die mit 1 gewichtete Wahrscheinlichkeit $p_y$ für das Wort "blaue" und ferner die mit 1 gewichtete Wahrscheinlichkeit $p_x$ für das Wort "blaues" bei der Bestimmung der modifizierten Termwahrscheinlichkeit $p''_y$ für das Wort "blaue" berücksichtigt.

Wird schließlich die modifizierte Termwahrscheinlichkeit $p''_z$ für das Wort "blau" bestimmt, ergibt sich, dass die Worte "blaues" und "blaue" ein höheres Ähnlichkeitsmaß A haben als das Wort "blau", so dass bei der Bestimmung der modifizierten Termwahrscheinlichkeit $p''_z$ für das Wort "blau" alle Wahrscheinlichkeiten der Worte "blau", "blaue" und "blaues", jeweils mit 1 gewichtet, berücksichtigt werden.

Somit ergibt sich als modifizierte Termwahrscheinlichkeit $p''_x$ für das Wort "blaues" zu 0,02 (Wahrscheinlichkeit für das Wort "blaues"), die modifizierte Wahrscheinlichkeit $p''_y$ für das Wort "blaue" zu 0,03 (Wahrscheinlichkeit für das Wort "blaue" oder "blaues") und die modifizierte Wahrscheinlichkeit $p''_z$ für das Wort "blau" zu 0,04 (Wahrscheinlichkeit für das Wort "blau", "blaue" oder "blaues").

Schritt 26: Für die Bewertung von Datensätzen ist es sinnvoll, die Wahrscheinlichkeit zu berechnen, dass ein Datensatz einen Term enthält, hierzu ist es sinnvoll die Anzahl der Terme je Datensatz zu berücksichtigen. Diese hat eine Verteilung, die im voraus ermittelt und gespeichert werden kann. Zum Beispiel kann die durchschnittliche Anzahl der Terme je Datensatz ermittelt werden. Aber auch eine genaue Berechnung ist möglich. Betrachtet man für das Beispiel mit 300 Datensätzen den Fall, dass 150 davon 5 Terme besitzen und weitere 150 davon 10 Terme. Die Wahrscheinlichkeit, dass eine Kombination von 5 Termen eine gegebenen Term zum Beispiel 'blaues' enthält, lässt sich berechnen durch: $1 - (1 - p'_x)^5$. Der Ausdruck in Klammern gibt die Wahrscheinlichkeit an, dass ein Term gerade nicht 'blaues' ist. Die 5-te Potenz liefert, dann die Wahrscheinlichkeit, dass eine Kombination von 5 Termen, den Term 'blaues' nicht enthält. Der gesamte Ausdruck liefert, dann die entsprechende Wahrscheinlichkeit, dass ein Datensatz der Länge 5 den Term enthält. Für Datensätze der Länge 10 ergibt sich der Ausdruck zu: $1 - (1 - p'_x)^{10}$. In dem Beispiel haben aber jeweils 150 Datensätze die Länge 5 und jeweils 150 Datensätze die Länge 10. Daraus folgt dann eine Gesamtwahrscheinlichkeit, dass ein beliebiger Datensatz den Term 'blaues' enthält zu:

$$p'_x = \frac{150(1-(1-p''_x)^5)+150(1-(1-p''_x)^{10})}{300}$$

Daraus ergibt sich die modifizierte Wahrscheinlichkeit, dass ein Datensatz den Term 'blaues' enthält zu: 0,14. Nach dem gleichen Verfahren werden die modifizierten Wahrscheinlichkeiten: $p''_y$ (=0,20)

$$p'_y = \frac{150(1-(1-p''_y)^5)+150(1-(1-p''_y)^{10})}{300}$$

und $p''_z$ (=0,26) berechnet.

Anschließend wird im Schritt 27 eine Bewertung der Relevanz $r_l$ der Datensätze $d_l$ für die Suchanfrage Q durchgeführt. Dabei wird für jeden Term $t_j$ der Teilmenge V geprüft, ob er in einem Datensatz $d_l$ vorkommt. Wenn ein Term $t_j$ der Teilmenge V in einem Datensatz $d_l$ vorkommt, erhält dieser Datensatz $d_l$ eine höhere Relevanz $r_l$ als ein Datensatz $d_m$, in dem der Term $t_j$ der Teilmenge V nicht vorkommt. Außerdem erhält ein Datensatz $d_l$, in dem ein Term $t_j$ vorkommt, der eine niedrigere modifizierte Wahrscheinlichkeit $p'_j$ hat, eine höhere Relevanzbewertung $r_l$ als ein Datensatz $d_m$, in welchem ein Term $t_j$ vorkommt, der eine höhere modifizierte Wahrscheinlichkeit $p'_j$ hat. Außerdem wird die Relevanzbewertung $r_l$ eines Datensatzes $d_l$ höher, wenn ein Term $t_j$ der Teilmenge V häufiger in diesem Datensatz $d_l$ vorkommt. Schließlich können die einzelnen Felder der Datensätze $d_l$ noch unterschiedlich gewichtet werden. Wenn ein Term $t_j$ in einem Feld eines Datensatzes $d_l$ vorkommt, kann dies zu einer höheren Relevanzbewertung $r_l$ des Datensatzes $d_l$ führen, als wenn derselbe Term $t_j$ in einem anderen, weniger wichtigen Feld des Datensatzes $d_l$ vorkommt.

Die vorstehend beschriebene Relevanzbewertung $r_l$ wird für alle Suchterme $q_i$ durchgeführt, wenn die Suchanfrage Q mehrere Suchterme $q_i$ enthält. In dem konkreten Beispiel wird somit auch eine Teilmenge V mit Termen $t_j$ für das Wort "Shirt" ermittelt. Wie vorstehend erläutert, kann diese Teilmenge V beispielsweise die Wörter "Shirt", "Shirts", "T-Shirt" enthalten. Danach wird, wie vorstehend beschrieben, die modifizierte Wahrscheinlichkeit $p'_j$ für jeden Term $t_j$ dieser Teilmenge V zu dem Suchwort "Shirt" bestimmt. Es ergibt sich in diesem Fall beispielsweise für das Wort "Shirt" die modifizierte Wahrscheinlichkeit 0,05 (Wahrscheinlichkeit für das Wort "Shirt"), für das Wort "Shirts" dieser Teilmenge V die modifizierte Wahrscheinlichkeit 0,07 (Wahrscheinlichkeit für das Wort "Shirt" oder "Shirts") und für das Wort "T-Shirt" dieser Teilmenge V die modifizierte Wahrscheinlichkeit 0,14 (Wahrscheinlichkeit für das Wort "Shirt", "T-Shirt" oder "Shirts").

Nun kann für die ursprüngliche Suchanfrage "blaues Shirt" eine Relevanzbewertung durchgeführt werden. Die Wahrscheinlichkeit dafür, dass ein Datensatz $d_l$ den Term "blaues Shirt" enthält, ist 0,007 und dies führt zu einer Relevanzbewertung von 2,14. Enthält ein Datensatz $d_l$ den Term "blaue Shirts", ergibt sich eine modifizierte Wahrscheinlichkeit von 0,015. (Dies ist das Produkt aus der modifizierten Wahrscheinlichkeiten für "blaue" (0,20) und "Shirts"(0,07)) Daraus ergibt sich eine Relevanzbewertung von 1,84 (der Absolutwert des Logarithmus von 0,015) für diesen Datensatz $d_l$. Enthält ein Datensatz $d_l$ den Term "T-Shirt blau", ergibt sich eine modifizierte Wahrscheinlichkeit von 0,036. Dies führt zu einer Relevanzbewertung von 1,4 des Datensatzes $d_l$.

Schließlich ist es bei mehreren Suchtermen $q_i$ noch möglich, die Reihenfolge und die Positionen des Auftretens der Terme $t_j$ der jeweiligen Teilmenge V in einem Datensatz $d_l$ zu berücksichtigen. Enthält die Suchanfrage Q die Suchterme $q_1$, $q_2$ in dieser Reihenfolge, wird ein Datensatz $d_l$, welcher Terme $t_j$ der Teilmenge V, welche zu dem ersten Suchterm $q_1$ gehören, als erstes und danach Terme $t_k$ der anderen Teilmenge V, die zu dem zweiten Suchterm $q_2$ gehören, als zweites, führt dies zu einer höheren Relevanzbewertung, als wenn die Terme in umgekehrter Reihenfolge auftreten. Des Weiteren wird ein Datensatz $d_l$ mit einer höheren Relevanz bewertet, wenn die Terme $t_j$ der beiden Teilmengen nah beieinander auftreten. Eine besonders hohe Relevanzbewertung ergibt sich, wenn die Terme $t_j$ der beiden Teilmengen zu den beiden Suchtermen $q_1$ und $q_2$ aufeinanderfolgend, insbesondere in der richtigen Reihenfolge, auftreten. Je weiter die Terme $t_j$ der beiden Teilmengen zu den beiden Suchtermen voneinander entfernt in einem Datensatz $d_l$ auftreten, desto größer ist die Wahrscheinlichkeit, dass sie in unterschiedlichen sprachlichen Kontexten, zum Beispiel in der Produktbeschreibung, vorkommen, so dass das Auftreten der Terme $t_j$ dann zu einer niedrigeren Relevanzbewertung führt. Auch in diesem Fall kann dasselbe vorstehend beschriebene Prinzip angewandt werden, die Wahrscheinlichkeit für einen Datensatz zu ermitteln, der die Suchterme bzw. Terme $t_j$ der Teilmenge V in der gleichen oder einer besseren Lage enthält. Dabei wird angenommen, dass die Positionen der Terme $t_j$ in den Datensätzen $d_l$ unabhängige Zufallsvariablen sind.

Nachdem für jeden Datensatz $d_l$ eine Relevanzbewertung $r_l$ durchgeführt worden ist, wird im Schritt 28 eine Liste mit den Datensätzen $d_u$, $d_v$, $d_w$, ... erzeugt, welche die höchste Relevanzbewertung $r_i$ haben. Diese Liste wird dann in der Reihenfolge der Relevanzbewertungen $r_l$ ausgegeben.

Im Folgenden wird ein zweites Ausführungsbeispiel des erfindungsgemäßen Verfahrens beschrieben:

Das zweite Ausführungsbeispiel unterscheidet sich von dem vorstehend beschriebenen ersten Ausführungsbeispiel in der Gewichtungsverteilung X. Bei dem zweiten Ausführungsbeispiel ist die Wahrscheinlichkeitsverteilung X eine Sigmoid-Funktion. Bei der Sigmoid-Funktion ergibt sich ein stetiger Übergang zwischen den beiden Werten 0 und 1. Hierdurch wird erreicht, dass Terme $t_k$ der Teilmenge V, welche ein kleineres Ähnlichkeitsmaß A besitzen, aber deren Ähnlichkeitsmaße sich sehr nah bei dem Term $t_j$ befinden, für den die modifizierte Wahrscheinlichkeit $p'_j$ ermittelt wird, nicht - wie beim ersten Ausführungsbeispiel - unberücksichtigt bleiben, sondern noch mit einer geringeren Gewichtung berücksichtigt werden.

Terme $t_k$, die ein sehr viel geringeres Ähnlichkeitsmaß A als der betrachtete Term $t_i$ haben, bleiben jedoch weiterhin praktisch unberücksichtigt, da die aus der Sigmoid-Funktion ermittelte Gewichtung nahe 0 ist.

Bei dem zweiten Ausführungsbeispiel wird die Gewichtung, mit der die Wahrscheinlichkeit $p_j$ eines zweiten Terms $t_k$ in die modifizierte Termwahrscheinlichkeit $p''_j$ eines ersten Terms $t_j$ eingeht, durch die Auswertung einer Sigmoid-Funktion bestimmt, wobei die Auswertungsstelle die Subtraktion des Ähnlichkeitsmaßes $A_{ij}$ des ersten Terms $t_j$ vom Ähnlichkeitsmaß $A_{ik}$ des zweiten Terms $t_k$ ist. Im Folgenden wird das am Beispiel des Suchterms (qi) "Sympathie" erläutert. Die Einrichtung 5 (Schritt 21) habe hierzu eine Menge von ähnlichen Termen (V) ermittelt, und die Einrichtung 6 und 7 (Schritt 22, 23) haben die zugehörigen Ähnlichkeiten und Termwahrscheinlichkeiten ermittelt.

| Term | Ähnlichkeit zum Suchterm | Termwahrscheinlichkeit |
|---|---|---|
| Sympathie ($t_1$) | 100 ($A_{i1}$) | 0,003 ($p_1$) |
| Symphatie ($t_2$) | 83,4 ($A_{i2}$) | 0,0005 ($p_2$) |
| Synpathie ($t_3$) | 83,4 ($A_{i3}$) | 0,0005 ($p_3$) |
| Sympathisch ($t_4$) | 80,9 ($A_{i4}$) | 0,002 ($p_4$) |
| Sympathy ($t_5$) | 79,7 ($A_{i5}$) | 0,002 ($p_5$) |

Die Einrichtung 8 (Schritt 24) ermittelt die Gewichtungsverteilung nun anhand einer Sigmoid-funktion. Eine mögliche solche Funktion ist die kumulierte Gaußsche Normalverteilung. Im Folgenden werden die Ähnlichkeitsdifferenzen (mit der zugehörigen Gewichtung), wie sie die Einrichtung 8 berechnet dargestellt:

| | ($t_1$) | ($t_2$) | ($t_3$) | ($t_4$) | ($t_5$) |
|---|---|---|---|---|---|
| $A_{ik} - A_{i1}$ ($X_1$) | 0 (0,5) | -16,6 (0,0) | -16,6 (0,0) | -19,1 (0,0) | -20,3 (0,0) |

(fortgesetzt)

|  | $(t_1)$ | $(t_2)$ | $(t_3)$ | $(t_4)$ | $(t_5)$ |
|---|---|---|---|---|---|
| $A_{ik} - A_{i2}$ $(X_2)$ | 16,6 (1,0) | 0 (0,5) | 0 (0,5) | -2,5 (0,01) | -3,65 (0,0) |
| $A_{ik} - A_{i3}$ $(X_3)$ | 16,6 (1,0) | 0 (0,5) | 0 (0,5) | -2,5 (0,01) | -3,65 (0,0) |
| $A_{ik} - A_{i4}$ $(X_4)$ | 19.1 (1,0) | 2,5 (0,99) | 2,5 (0,99) | 0 (0,5) | -1,2 (0,12) |
| $A_{ik} - A_{i5}$ $(X_5)$ | 20,3 (1,0) | 3,65 (1,0) | 3,65 (1,0) | 1,2 (0,88) | 0 (0,5) |

Die modifizierten Termwahrscheinlichkeiten ergeben sich nun durch Anwendung der Gewichtung auf die ursprünglichen Termwahrscheinlichkeiten:

|  | $(p_1 = 0{,}003)$ | $(p_2 = 0{,}0005)$ | $(p_3 = 0{,}0005)$ | $(p_4 = 0{,}002)$ | $(p_5 = 0{,}002)$ |
|---|---|---|---|---|---|
| $p_1'' =$ | 0,5 * 0,003 | + 0,0 | + 0,0 | + 0,0 | + 0,0 |
| $p_2'' =$ | 1,0 * 0,003 | + 0,5 * 0,0005 | + 0,5 * 0,0005 | + 0,01 * 0,002 | + 0,0 |
| $p_3'' =$ | 1,0 * 0,003 | + 0,5 * 0,0005 | + 0,5 * 0,0005 | + 0,01 * 0,002 | + 0,0 |
| $p_4'' =$ | 1,0 * 0,003 | + 0,99 * 0,0005 | + 0,99 * 0,0005 | + 0,5 * 0,002 | + 0,12 * 0,002 |
| $p_5'' =$ | 1,0 * 0,003 | + 1,0 * 0,0005 | + 1,0 * 0,0005 | + 0,88 * 0,002 | + 0,5 * 0,002 |

Hierdurch ergibt sich die erfindungsgemäße Eigenschaft, dass Terme deren Ähnlichkeitsmaß größer ist, stärker in die modifizierte Termwahrscheinlichkeit eingehen, als Terme deren modifizierte Termwahrscheinlichkeit kleiner ist.

Unter der Annahme, dass die Datenbank die gleiche Verteilung an Termen pro Datensatz, wie im vorherigen Ausführungsbeispiel hat, d.h. 150 Datensätze haben 5 Terme und 150 Datensätze haben 10 Terme, können die jeweiligen modifizierten Wahrscheinlichkeiten $p_1'$, $p_2'$, $p_3'$, $p_4'$, $p_5'$ durch die bereits ermittelte Formel berechnet (Schritt 26) werden.

$$p'_i = \frac{150(1-(1-p''_i)^5) + 150(1-(1-p''_i)^{10})}{300}$$

Diese modifizierten Wahrscheinlichkeiten werden nun wie im vorherigen erfindungsgemäßen Ausführungsbeispiel an die Bewertungseinheit 9 übermittelt.

Die vorstehend beschriebenen Verfahrensschritte können als Hardwarekomponenten oder als Software implementiert werden. Die Software kann auf einem Datenträger, d.h. auf einem Computerprogrammprodukt, gespeichert sein. Der in der Software enthaltene Programmcode ist zur Durchführung des vorstehend beschriebenen Verfahrens geeignet, wenn der Programmcode von einem Computer ausgeführt wird.

**Patentansprüche**

1. Computerimplementiertes Verfahren zum Suchen in einer Vielzahl (D) von Datensätzen ($d_l$), bei dem

  - eine Suchanfrage (Q) mit mindestens einem Suchterm ($q_i$) empfangen wird,
  - aus einer Referenzmenge (T) eine Teilmenge (V) mit Termen ($t_j$) ermittelt wird, die ähnlich oder identisch mit dem Suchterm ($q_i$) sind,
  - für jeden Term ($t_j$) der Teilmenge (V)

    - ein Ähnlichkeitsmaß ($A_j$) zu dem Suchterm ($q_i$) bestimmt wird,
    - die Wahrscheinlichkeit ($p_j$) für das Auftreten des Terms ($t_j$) bestimmt wird,
    - eine von dem Term ($t_j$) abhängige Gewichtungsverteilung ($X_j$) auf die Terme ($t_k$) der Teilmenge (V) angewandt wird, wobei die Terme ($t_k$), die ein höheres Ähnlichkeitsmaß ($A_k$) besitzen, stärker gewichtet werden als Terme ($t_k$) mit einem niedrigeren Ähnlichkeitsmaß ($A_k$), und
    - eine modifizierte Wahrscheinlichkeit ($p'_j$, $p''_j$) für den Term ($t_j$) aus den gewichteten Wahrscheinlichkeiten

der Terme ($t_k$) der Teilmenge (V) bestimmt wird,

- die Datensätze ($d_l$) im Hinblick auf ihre Relevanz (R) für die Suchanfrage (Q) bewertet werden, wobei

    - geprüft wird, ob die Terme ($t_j$) der Teilmenge (V) in dem Datensatz ($d_l$) vorkommen, und,
    - wenn ein Term ($t_j$) der Teilmenge (V) in dem Datensatz ($d_l$) vorkommt, eine niedrigere modifizierte Wahrscheinlichkeit ($p'_j$, $p''_j$) des Terms ($t_j$) zu einer höheren Relevanzbewertung des Datensatzes ($d_l$) führt, und

- zumindest eine Datensatzteilmenge in Abhängigkeit von ihrer Relevanzbewertung (R) ausgegeben wird.

2. Verfahren nach Anspruch 1,
**dadurch gekennzeichnet, dass**
die Gewichtungsverteilung ($X_j$) so ausgebildet ist, dass bei der Bestimmung der modifizierten Wahrscheinlichkeit ($p'_j$, $p''_j$) eines Terms ($t_j$) nur die Wahrscheinlichkeit ($p_j$) des Terms ($t_j$) selbst sowie die Wahrscheinlichkeit ($p_k$) anderer Terme ($t_k$) berücksichtigt werden, die ein höheres Ähnlichkeitsmaß ($A_k$) als der eine Term ($t_j$) besitzen.

3. Verfahren nach Anspruch 1,
**dadurch gekennzeichnet, dass**
die Gewichtung ($X_j$), mit der die Wahrscheinlichkeit ($p_k$) eines zweiten Terms ($t_k$) in die modifizierte Wahrscheinlichkeit ($p'_j$, $p''_j$) eines ersten Terms ($t_j$) eingeht, durch die Auswertung einer Sigmoid-Funktion bestimmt wird, wobei die Auswertungsstelle die Subtraktion des Ähnlichkeitsmaßes ($A_k$) des ersten Terms ($t_j$) vom Ähnlichkeitsmaß ($A_j$) des zweiten Terms ($t_i$) ist.

4. Verfahren nach Anspruch 1 oder 2,
**dadurch gekennzeichnet, dass**
die Gewichtungsverteilung ($X_j$) so ausgebildet ist, dass bei der Bestimmung der modifizierten Wahrscheinlichkeit ($p'_j$, $p''_j$) eines Terms ($t_j$) ferner Wahrscheinlichkeiten ($p_k$) von anderen Termen ($t_k$) mit einer geringerer Gewichtung berücksichtigt werden, die ein niedrigeres Ähnlichkeitsmaß ($A_k$) besitzen, wobei die Gewichtung eines anderen Terms ($t_k$) mit niedrigerem Ähnlichkeitsmaß von der Differenz des Ähnlichkeitsmaßes ($A_j$) des Terms ($t_j$) für den die modifizierte Wahrscheinlichkeit ($p'_j$, $p''_j$) bestimmt wird, und des Ähnlichkeitsmaßes ($A_k$) des anderen Terms ($t_k$) abhängt.

5. Verfahren nach einem der vorhergehenden Ansprüche,
**dadurch gekennzeichnet, dass**
bei der Bestimmung der modifizierten Wahrscheinlichkeit ($p'_j$, $p''_j$), ein Zwischenschritt eingefügt wird, bei dem die Verteilung der Anzahl der Terme je Datensatz berücksichtigt wird.

6. Verfahren nach einem der vorhergehenden Ansprüche,
**dadurch gekennzeichnet, dass**
sich die Bewertung eines Datensatzes ($d_l$) aus dem Absolutbetrag des Logarithmus der modifizierten Wahrscheinlichkeit ($p'_j$, $p''_j$) des zugehörigen Terms ($t_j$) ergibt.

7. Verfahren nach einem der vorhergehenden Ansprüche,
**dadurch gekennzeichnet, dass**
die Wahrscheinlichkeit ($p_j$) eines Terms ($t_j$) der Teilmenge (V) dadurch bestimmt wird, dass die dem Term ($t_j$) zugeordnete Wahrscheinlichkeit ($p_j$) vorab aus der Häufigkeit des Auftretens des Terms ($t_j$) in der Referenzmenge (T) oder in den Datensätzen ($d_l$) ermittelt und in einem Speicher (11) gespeichert wird und die gespeicherte Wahrscheinlichkeit ($p_j$) für den Term ($t_j$) aus dem Speicher (11) ausgelesen wird.

8. Verfahren nach einem der vorhergehenden Ansprüche,
**dadurch gekennzeichnet, dass**
bei der Relevanzbewertung der Datensätze ($d_l$) ein Datensatz höher bewertet wird, wenn ein Term ($t_j$) der Teilmenge (V) häufiger in diesem Datensatz vorkommt.

9. Verfahren nach einem der vorhergehenden Ansprüche,
**dadurch gekennzeichnet, dass**
die Datensätze ($d_l$) jeweils mehrere Felder enthalten und dass die Relevanz ($r_l$) eines Datensatzes ($d_l$) außerdem in Abhängigkeit davon bewertet wird, in welchem Feld ein Term ($t_j$) der Teilmenge (V) in dem Datensatz ($d_l$) vorkommt.

**10.** Verfahren nach einem der vorhergehenden Ansprüche,
**dadurch gekennzeichnet, dass**
die Suchanfrage (Q) mehrere Suchterme ($q_i$) enthält, dass für jeden Suchterm ($q_i$) gesondert eine Teilbewertung bestimmt wird, dass eine weitere Teilbewertung für die aus den Suchtermen ($q_i$) zusammengesetzte Suchanfrage (Q) bestimmt wird und dass die Bewertung (R) der Suchanfrage (Q) aus den Teilbewertungen bestimmt wird.

**11.** Computerprogrammprodukt mit Programmcode zur Durchführung des Verfahrens gemäß einem der Ansprüche 1 bis 10, wenn der Programmcode von einem Computer ausgeführt wird.

**12.** Suchmaschine, ausführbar von einem Computer, mit

- einer Empfangseinheit (4) zum Empfangen einer Suchanfrage (Q) mit mindestens einem Suchterm ($q_i$),
- Mitteln (5) zum Ermitteln einer Teilmenge (V) mit Termen ($t_j$), die ähnlich oder identisch mit dem Suchterm ($q_i$) sind,
- Mitteln (6 bis 8) zum Bestimmen der modifizierten Wahrscheinlichkeit ($p'_j$, $p''_j$) für jeden Term ($t_j$) der Teilmenge (V), mit denen

- ein Ähnlichkeitsmaß ($A_j$) zu dem Suchterm ($q_i$) bestimmbar ist,
- die Wahrscheinlichkeit ($p_j$) für das Auftreten des Terms ($t_j$) bestimmbar ist,
- eine von dem Term ($t_j$) abhängige Gewichtungsverteilung (X) auf die Terme ($t_k$) der Teilmenge (V) anwendbar ist, wobei die Terme ($t_k$), die ein höheres Ähnlichkeitsmaß ($A_k$) besitzen, stärker gewichtet werden als Terme ($t_k$) mit einem niedrigeren Ähnlichkeitsmaß ($A_k$), und
- die modifizierte Wahrscheinlichkeit ($p'_j$, $p''_j$) für den Term ($t_j$) aus den gewichteten Wahrscheinlichkeiten der Terme ($t_k$) der Teilmenge (V) bestimmbar ist,

- einer Bewertungseinheit (9) zum Bewerten von Datensätzen ($d_l$) im Hinblick auf ihre Relevanz für die Suchanfrage (Q), wobei

- prüfbar ist, ob die Terme ($t_j$) der Teilmenge (V) in dem Datensatz ($d_l$) vorkommen, und,
- wenn ein Term ($t_j$) der Teilmenge (V) in dem Datensatz ($d_l$) vorkommt, eine niedrigere modifizierte Wahrscheinlichkeit ($p'_j$, $p''_j$) des Terms ($t_j$) zu einer höheren Bewertung ($r_l$) des Datensatzes ($d_l$) führt, und

- einer Ausgabeeinheit (10) zum Ausgeben zumindest einer Datensatzteilmenge in Abhängigkeit von ihrer Relevanzbewertung (R).

**13.** Suchmaschine nach Anspruch 12,
**dadurch gekennzeichnet, dass**
die Suchmaschine einen Speicher (11) umfasst, in dem die Referenzmenge (T) mit Termen ($t_j$) oder eine Menge mit den Termen ($t_j$), die in den Datensätzen ($d_l$) vorkommen, sowie die den Termen ($t_j$) zugeordneten Wahrscheinlichkeiten ($p_j$) gespeichert sind.

Fig. 1

Fig. 2

Europäisches
Patentamt

European
Patent Office

Office européen
des brevets

# EUROPÄISCHER RECHERCHENBERICHT

**Nummer der Anmeldung**

EP 10 17 4043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TUAN-QUANG NGUYEN ET AL: "Query expansion using augmented terms in an extended Boolean model" JOURNAL OF COMPUTING SCIENCE AND ENGINEERING KOREAN INSTITUTE OF INFORMATION SCIENTISTS AND ENGINEERS SOUTH KOREA, Bd. 2, Nr. 1, März 2008 (2008-03), Seiten 26-43, XP002603537 ISSN: 1976-4677 * das ganze Dokument * ----- | 1-13 | INV. G06F17/30 |
| X | OH-WOOG KWON ET AL: "Query expansion using domain-adapted, weighted thesaurus in an extended Boolean model" CIKM 94. PROCEEDINGS OF THE THIRD INTERNATIONAL CONFERENCE ON INFORMATION AND KNOWLEDGE MANAGEMENT ACM NEW YORK, NY, USA, 1994, Seiten 140-146, XP002603538 ISBN: 0-89791-674-3 * das ganze Dokument * ----- | 1-13 | |
| | | | **RECHERCHIERTE SACHGEBIETE (IPC)** |
| X | US 2006/253427 A1 (WU JUN [US] ET AL) 9. November 2006 (2006-11-09) * Absatz [0038] - Absatz [0039] * * Absatz [0045] - Absatz [0052] * ----- | 1-13 | G06F |
| X | EP 0 752 676 A2 (SUN MICROSYSTEMS INC [US]) 8. Januar 1997 (1997-01-08) * Spalte 11, Zeile 44 - Spalte 14, Zeile 39 * ----- | 1-13 | |
| X | US 2008/077570 A1 (TANG YUANHUA T [US] ET AL) 27. März 2008 (2008-03-27) * Absatz [0151] * * Absatz [0372] - Absatz [0377] * * Absatz [0784] - Absatz [0803] * ----- | 1-13 | |

-/--

Der vorliegende Recherchenbericht wurde für alle Patentansprüche erstellt

| Recherchenort | Abschlußdatum der Recherche | Prüfer |
|---|---|---|
| München | 8. Oktober 2010 | Eichenauer, Lars |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 10 17 4043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/114721 A1 (JONES ROSIE [US] ET AL) 15. Mai 2008 (2008-05-15) <br> * Absatz [0063] - Absatz [0079] * <br> * Absatz [0050] - Absatz [0051] * <br> ----- | 1-13 | |
| X | EP 1 072 982 A2 (MATSUSHITA ELECTRIC IND CO LTD [JP]) 31. Januar 2001 (2001-01-31) <br> * Absatz [0050] - Absatz [0055] * <br> * Absatz [0033] - Absatz [0049] * <br> ----- | 1-13 | |
| X | US 2008/082511 A1 (WILLIAMS FRANK J [US]) 3. April 2008 (2008-04-03) <br> * das ganze Dokument * <br> ----- | 1-13 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. Oktober 2010 | Eichenauer, Lars |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

   ......................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 10 17 4043

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2010

| Im Recherchenbericht angeführtes Patentdokument | Datum der Veröffentlichung | Mitglied(er) der Patentfamilie | Datum der Veröffentlichung |
|---|---|---|---|
| US 2006253427 A1 | 09-11-2006 | CN 101297291 A<br>EP 1877939 A1<br>JP 2008541233 T<br>KR 20080008400 A<br>WO 2006121702 A1 | 29-10-2008<br>16-01-2008<br>20-11-2008<br>23-01-2008<br>16-11-2006 |
| EP 0752676 A2 | 08-01-1997 | DE 69624985 D1<br>DE 69624985 T2<br>JP 9223161 A<br>US 6282538 B1<br>US 5724571 A<br>US 6101491 A<br>US 6182063 B1 | 09-01-2003<br>18-09-2003<br>26-08-1997<br>28-08-2001<br>03-03-1998<br>08-08-2000<br>30-01-2001 |
| US 2008077570 A1 | 27-03-2008 | KEINE | |
| US 2008114721 A1 | 15-05-2008 | KEINE | |
| EP 1072982 A2 | 31-01-2001 | CN 1282934 A<br>JP 2001043236 A<br>KR 20010067045 A<br>TW 476034 B | 07-02-2001<br>16-02-2001<br>12-07-2001<br>11-02-2002 |
| US 2008082511 A1 | 03-04-2008 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1095326 B1
- EP 1208465 B1
- EP 1341009 B1
- EP 1459206 B1
- EP 1622054 A1
- WO 2008085637 A2
- WO 2008137395 A1
- WO 2007144199 A1